(19) Europäisches Patentamt / European Patent Office / Office européen des brevets

(11) **EP 3 367 729 B1**

(12) **EUROPEAN PATENT SPECIFICATION**

(45) Date of publication and mention
of the grant of the patent:
**26.10.2022 Bulletin 2022/43**

(21) Application number: **17158187.9**

(22) Date of filing: **27.02.2017**

(51) International Patent Classification (IPC):
***H04W 24/02*** *(2009.01)*    *H04W 64/00* *(2009.01)*
*H04W 92/16* *(2009.01)*

(52) Cooperative Patent Classification (CPC):
**H04W 24/02;** H04W 64/00; H04W 92/16

(54) **ACCESS NODE, CONTROLLER FOR AN ACCESS NODE AND METHOD FOR IMPROVING A DEPLOYMENT OF AN ACCESS NODE**

ZUGANGSKNOTEN, STEUERGERÄT FÜR EINEN ZUGANGSKNOTEN UND VERFAHREN ZUR VERBESSERUNG EINES EINSATZES EINES ZUGANGSKNOTENS

NOEUD D'ACCÈS, CONTRÔLEUR DE NOEUD D'ACCÈS ET PROCÉDÉ PERMETTANT D'AMÉLIORER UN DÉPLOIEMENT DE NOEUD D'ACCÈS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**29.08.2018 Bulletin 2018/35**

(73) Proprietor: **Nokia Solutions and Networks Oy 02610 Espoo (FI)**

(72) Inventors:
• **ATAWIA, Ramy 2018 Antwerp (BE)**

• **Gacanin, Haris 2018 Antwerpen (BE)**

(74) Representative: **Novagraaf Technologies Bâtiment O2 2, rue Sarah Bernhardt CS90017 92665 Asnières-sur-Seine Cedex (FR)**

(56) References cited:
**WO-A1-2015/175342**    **US-A1- 2015 071 248**

**Description**

The present patent disclosure relates to indoor network configuration. Particular embodiments relate to a method for improving a deployment of an access node in an indoor network; to an access node for providing access to a home network; and to a computer program product.

Indoor access nodes for providing wired and wireless access to a backbone network such as the internet are likely equipped with multiple technologies that can be used for backhaul communications. Backhaul communications refers to a connection to the backbone network such as the internet. Access nodes are connected via a backhaul interface to the backbone network, with a backhaul interface using for instance digital subscriber line (DSL), Ethernet, cable internet, or power-line communication (PLC).

It is expected that future indoor networks will have even more access nodes deployed in the same or nearby spaces. In other words, a dense deployment of access nodes (ANs) is expected, wherein the ANs may have multiple technologies for backhaul.

In networks with such dense deployments, the connection quality experienced by users with their user devices may suffer for various reasons, for instance due to interference by other access nodes/user devices, also from neighboring networks. Furthermore, the access nodes may be in a location that results in a poor connection to at least some of the user devices at a certain time. Also, the access nodes may be connected via a backhaul interface with an insufficient connection capacity.

In case a user experiences a problem with his connection, typically a deployment configuration, comprising a location and backhaul interface of an access node, is selected manually, for instance by a skilled user or technician, and at one or few moments in time. The technician may perform some tests including local radio frequency measurements. This process is both time consuming as well as incapable of providing a solution for future times, since the wireless environment changes over time, even rapidly.

Patent document published under number WO 2015/175342 A1 discloses a method for selecting an operating channel for a small cell is provided. The method includes determining to select a different operating channel at a small cell based on metrics like downlink quality metric and an uplink quality metric, causing one or more connected mode user equipments (UE) served by the small cell to handover to one or more neighboring cells based at least in part on determining to select the different operating channel, modifying one or more parameters configured to one or more idle mode UEs camped on the small cell to cause the one or more idle mode UEs to reselect to the one or more neighboring cells, and switching to use the different operating channel at least when the one or more connected mode UEs are handed over to the one or more neighboring cells.

It is therefore an object of embodiments according to the present patent disclosure to improve a deployment of an access node more often, without the need of a technician or a user with advanced knowledge of home networks being present.

The scope of the protection is defined by the appended claims. In particular, the subject-matter of the description of paragraphs 7 and 11 is according to the invention as defined in the claims.

Any examples/embodiments and features described in this specification that do not fall under the scope of the independent claims are to be interpreted as examples useful for understanding various embodiments of the invention.

According to a first aspect, a method according to claim 1 is provided.

The deployment may be seen as comprising the present configuration of the presently used backhaul interface and the present location of the access node. A backbone network is any network to which the home network should be connected, such as the internet or a corporate network environment. A backhaul interface may be any interface for providing access to a backbone network, wherein a connection to the backbone network may be via one or more other access nodes. The backhaul interfaces available to the access nodes may comprise wireless backhaul interfaces that may use techniques such as for example IEEE 802.11 or mmWave, featuring wavelengths of about 1cm to 1 mm and frequencies from 30 to 300 GHz, or any other suitable wireless technology. The backhaul interfaces available to the access node may comprise one or more wired backhaul interfaces such as PLC, DSL, Ethernet, Cable internet, etc. etc.

A home network may refer to a wireless local area network, in particular for indoor residential use. Such wireless local area networks may for example include networks according to the standard IEEE 802.11 of the Institute of Electrical and Electronics Engineers, but it will be understood that other types of networks may also be used.

The new location may be the location, or rough location, for instance within one, two or three meters, of the neighboring access node corresponding to the marked other backhaul interface. It will be clear that an indoor localization system, such as a radiofrequency based location determination system, may be used with which the locations of access nodes can be obtained and/or calculated and then shared.

The switching may be performed by the access node itself, e.g. once it is positioned in the new location, or furthermore a request of connecting the access node to the new backhaul interface (for instance by plugging in a certain wire) may be pushed to a user. This may be a user having administrator rights, and the pushing may occur via an app or any other means.

In a preferred embodiment, the obtained locations of the neighboring access nodes are relative locations defined as distances of the neighboring access nodes relative to the access node.

In a particularly preferred embodiment, the criteria further comprise a distance-throughput criterion, wherein the distance-throughput criterion is met for the other backhaul interface having a maximum corresponding weighted available data throughput, wherein the weighted available data throughput is the available data throughput weighted by the distance of the neighboring access nodes corresponding to the other backhaul interfaces.

In a further embodiment, the method further comprises obtaining position information of the user devices connected to the access node, wherein the criteria further comprise a user device-criterion which is met when all connections between the access node and the user devices are expected to be maintained at the new location.

In a preferred embodiment, the position information of the user devices comprises position coordinates of the user devices determined by the user devices, and the method further comprises estimating a service region that needs serving of a connection to a user device by the access node, wherein the service region is represented by a polygon built up of the position coordinates of the user devices that are furthest away from the access node, wherein user device-criterion is met when the serving region to be within range of the access node when the access node is at the new location.

The position information may be obtained by one of the available indoor localization systems, as discussed above. Since coordinates, such as x and y coordinates relative to a certain coordinate can then be used to determine the region wherein a connection should be served.

In another preferred embodiment the position information comprises indirect position information, being for instance received signal strength indicators of the access node by the user devices, the method further comprising: calculating distances of the user devices from the access node based on the position information; calculating a maximum distance by which the access node can be moved that allows all connections to the user devices to be maintained, wherein the user device-criterion is met when the new location is located at a distance from the present location of the access node that is smaller than or equal to the maximum distance.

In a further embodiment, the backhaul interface parameters of the other backhaul interfaces comprise a type of backhaul interface, a maximum data throughput of the backhaul interface, a utilization percentage of the backhaul interface, wherein the available data throughput is calculated based on the maximum data throughput and the utilization percentage, preferably by multiplying the maximum data throughput with an open percentage, wherein the open percentage is 100% minus the utilization percentage.

In a further embodiment, the method further comprises, before the step of obtaining respective backhaul interface parameters of one or more other backhaul interfaces used by the neighboring access nodes: when the obtained backhaul data throughput is lower than the demanded data throughput, providing a list of one or more supported backhaul interfaces that are supported by the access node; obtaining respective available data throughputs of the supported backhaul interfaces; determining a supported backhaul interface to be an available backhaul interface to the access node when the respective available data throughputs of the supported backhaul interfaces is larger than, or equal to, the demanded data throughput; when more than one supported backhaul interface has been determined to be an available backhaul interface, comparing available data throughputs of the available backhaul interfaces; switching to an available backhaul interface of the available backhaul interfaces having the largest respective available data throughput.

In this manner, before trying to use other backhaul interfaces that the other, neighboring access nodes are using, and in case the access node has access to more backhaul interfaces, first these are determined to be suitable or not.

In a preferred embodiment, the supported backhaul interfaces comprise one or more supported wireless backhaul interfaces, the method further comprising determining a supported wireless backhaul interface to be an available backhaul interface when an amount of network degradation caused by the present configuration is larger than a threshold value.

In a more preferred embodiment, the available data throughputs of the supported wireless backhaul interfaces are obtained by scanning the supported wireless backhaul interfaces, wherein the scanning of the supported wireless backhaul interfaces comprises sequentially switching a receiver of the access node to each of the supported wireless backhaul interfaces and recording a corresponding available data throughput, and determining that a wireless backhaul interface is available when the corresponding achievable data throughput is above a threshold value.

According to a further aspect of the present patent disclosure, there is provided an access node according to claim 12.

The fronthaul interface is any interface, such as previously mentioned wireless interface (e.g. a IEEE 802.11 based wireless interface), that is used to allow user devices to connect to the access device and therewith to home network and/or the backbone network.

It will be understood that the access node may be configured in further embodiments for performing the method steps according to the first aspect of the present patent disclosure, and will provide the same or similar advantages as for the method steps.

According to a further aspect, there is provided a computer program product comprising computer-executable instructions for performing any one method according to any one of the steps of any one of the embodiments disclosed above, when the program is run on a computer.

According to a further aspect, there is provided a computer program comprising computer-executable instructions to perform any one method according to any one of the steps of any one of the embodiments disclosed above, when the program is executed on a computer.

According to a further aspect, there is provided a computer device or other hardware device programmed to perform one or more steps of any one of the embodiments of the method disclosed above.

According to another aspect there is provided a data storage device encoding a program in machine-readable and machine-executable form to perform one or more steps of any one of the embodiments of the method disclosed above.

According to a further aspect, there is provided a computer program product comprising computer-executable instructions for performing the method of any one method according to any one of the steps of any one of the embodiments disclosed above, when the program is run on a computer.

Further aspects of the present patent disclosure are described by the dependent claims. The features from the dependent claims, features of any of the independent claims and any features of the other dependent claims may be combined as considered appropriate to the person of ordinary skill in the art, and not only in the particular combinations as defined by the claims.

Brief description of figures

The accompanying drawings are used to illustrate presently preferred non-limiting exemplary embodiments of methods and devices of the present patent disclosure. The above and other advantages of the features and objects of the present patent disclosure will become more apparent and the present patent disclosure will be better understood from the following detailed description when read in conjunction with the accompanying drawings, in which:

Figure 1 schematically illustrates an embodiment of an access node and an embodiment of a controller according to the present patent disclosure;
Figure 2 schematically illustrates a flowchart of an embodiment of a method according to the present patent disclosure;
Figure 3 schematically illustrates a flowchart of a preferred embodiment of a method according to the present patent disclosure;
Figure 4 schematically illustrates a flowchart of a further embodiment of a method according to the present patent disclosure;
Figure 5 illustrates a flowchart of yet another embodiment of a method according to the present patent disclosure;
Figure 6 schematically illustrates another embodiment of an access node according to the present patent disclosure, e.g. that shown in Figure 1, in a network environment;
Figure 7 schematically illustrates an example map of a floor of a home or office wherein access nodes according to an embodiment of the present patent disclosure, e.g. that shown in Figure 1, are positioned and are using certain backhaul interfaces;
Figure 8A schematically illustrates an example map wherein an access node serves user devices in a first position according to an embodiment of the present patent disclosure;
Figure 8B schematically illustrates the example map according to Figure 8A, wherein an access node serves user devices in a second position according to an embodiment of the present patent disclosure;
Figure 8C schematically illustrates the example map according to Figure 8A and 8B, wherein an access node can not serve the user devices in a third position according to an embodiment of the present patent disclosure; and
Figure 9 schematically illustrates estimating of a service region of an access node according to an embodiment of the present patent disclosure, wherein furthermore candidate solutions are indicated.

Description of embodiments

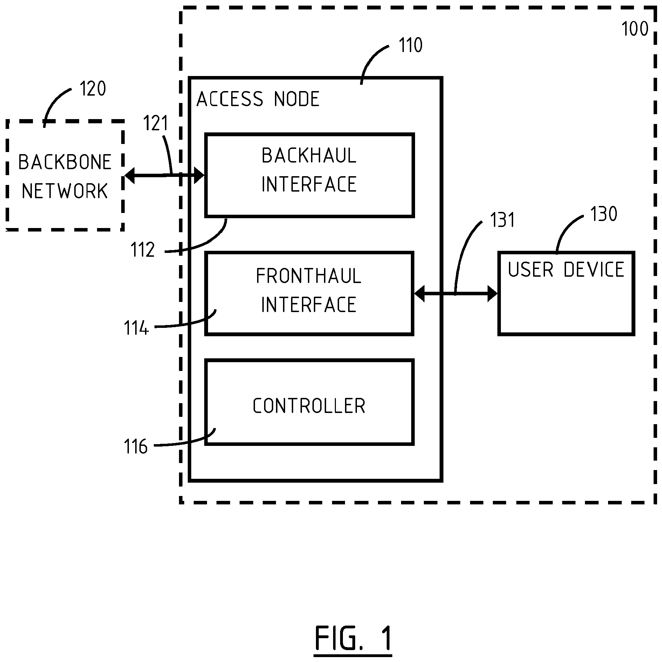

Referring to Figure 1, the access node may comprise a backhaul interface 112 and a fronthaul interface 114. The backhaul interface 112 may be coupled 121 to a backbone network 120, e.g. an IP network such as the Internet. The coupling 121 may be direct or may preferably be indirect via another access node (not shown) and this other access node may also be called a master access node (mAN). The fronthaul interface 114 may be coupled 131 to a user device 130, e.g. a set-top box, a desktop computer, a laptop computer, a smartphone, and the like. The coupling 131 may preferably be direct or may be indirect via another access node (not shown), in which latter case the present access node 110 may serve as a master access node for that other access node.

Although only one backhaul interface 112 is indicated, the access node may have further backhaul interfaces for several wired or wireless technologies, such as the ones described above.

The controller 116 may for example be a software module present in the access node 110, but it is to be noted that it may also be a hardware element of the access node 110. Alternatively, the controller 116 may be a software module executed outside of the access node 110, in a centralized or distributed manner, for example by a network operator, or by a specific access node designated for that purpose. Alternatively, the controller 116 may be a hardware element situated outside of the access node 110, for example at a network operator site. It may also be considered to combine one or more of these options for the controller 116. The controller 116 may be configured for performing any of the method steps described below.

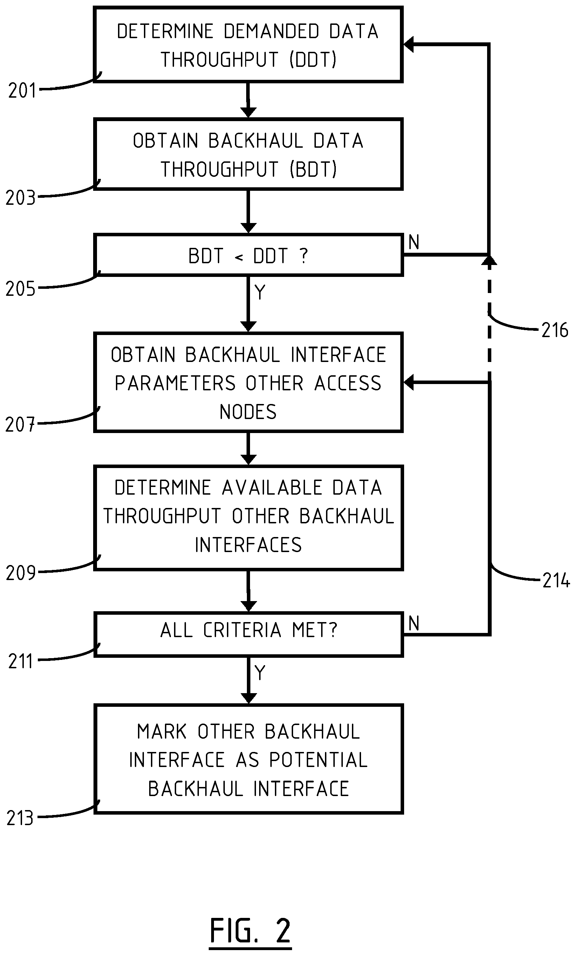

Now referring to Figure 2, an embodiment of a method of improving a deployment of an access node, such as the one of figure 1, in an indoor network. Step 201 indicates determining a data throughput demanded by user devices connected to the access node, that is, a demanded data throughput (DDT) is determined. The access node has a present configuration comprising a presently used backhaul interface coupling the access node to a backbone network and a present location of the access node. These will be described in further detail with respect to the further figures.

Step 203 is the step of obtaining a backhaul data throughput (BDT) of the present backhaul interface of the access node. This data throughput may be indicated as a certain data rate, such as in Megabits per seconds (Mbps) or any other suitable measure.

In step 205 it is decided whether the BDT is insufficient for providing the DDT. If the BDT is insufficient, step 207 of obtaining respective backhaul interface parameters of one or more other backhaul interfaces used by the neighboring access nodes will be performed. Neighboring access nodes indicates any access node within the same home network. Optionally only access nodes within a determined range can be considered as neighboring access nodes.

The backhaul interface parameters may comprise an available data throughput for that backhaul interface. In an embodiment, the backhaul interface parameters may comprise a type of backhaul interface, a maximum data throughput of the backhaul interface, a utilization percentage of the backhaul interface. In this case, the available data throughput may be calculated based on the maximum data throughput and the utilization percentage, preferably by multiplying the maximum data throughput with an open percentage, wherein the open percentage is 100% minus the utilization percentage.

An example of the backhaul interface parameters is given in Table 1.

Table 1: Example list of backhaul interface parameters for neighboring access nodes obtained by the access node

| Neighbor AN (#) | Backhaul interface type | Maximum data throughput (Gbps) | Utilization of data throughput (%) | Distance (m) |
|---|---|---|---|---|
| 1 | PLC | 1 | 30 | 2 |
| 2 | PLC | 2 | 70 | 5 |
| 3 | Ethernet | 1.5 | 80 | 10 |

In table 1, the neighbor access nodes are indicated with a number, here 1, 2 and 3. Respective backhaul interface types of backhaul interfaces presently used by these access nodes are further indicated, together with maximum available data throughputs for these backhaul interfaces. Based on the utilization percentage of the maximum data throughputs, the available data throughput can be estimated. For instance, for access node 2, 70% of the 2 Gbps is currently used. Therefore, 30% of the 2 Gbps may be available, that is 0.6 Gbps may be the available data throughput for this backhaul interface. The available throughput may be corrected, for instance depending on the interface type, when it is known that the full throughput may not be attainable due to known limitations. Furthermore, in Table 1, the distance relative to the present access node is given in meters. These distances give a location relative to the access node of the access nodes listed in the table. In other words, the distances give a measure of location of the other access nodes, which is described in more detail below.

Using the backhaul interface parameters, step 209 of determining an available data throughput (ADT) for each of the other backhaul interfaces for which backhaul interface parameters are received based on the received backhaul interface parameters is performed.

Thereafter, in step 211, it is determined whether the criteria are met for any of the other backhaul interfaces. In case all of the criteria are met, in step 213 the other backhaul interface may be marked as a marked other backhaul interface in case all of the one or more criteria are met. The criteria comprise a throughput criterion which is met for a certain other backhaul interface when the respective ADT is sufficient to meet the DDT of the user devices.

When one or more of the other backhaul interfaces, which are the respective backhaul interface used by the other (neighboring) access nodes, is marked, this indicates that the marked other backhaul interface is one that may potentially be used as the backhaul interface of the access node. In other words, the access node may switch its backhaul interface for connecting to the backbone network to the marked other backhaul interface. Hence, there may be a further step of switching the present backhaul interface to the marked other backhaul interface.

In case there is more than one marked backhaul interface, in an embodiment, the marked backhaul interface having the largest available throughput may be switched to by the access node as the backhaul interface used by the access node to couple to the backbone network.

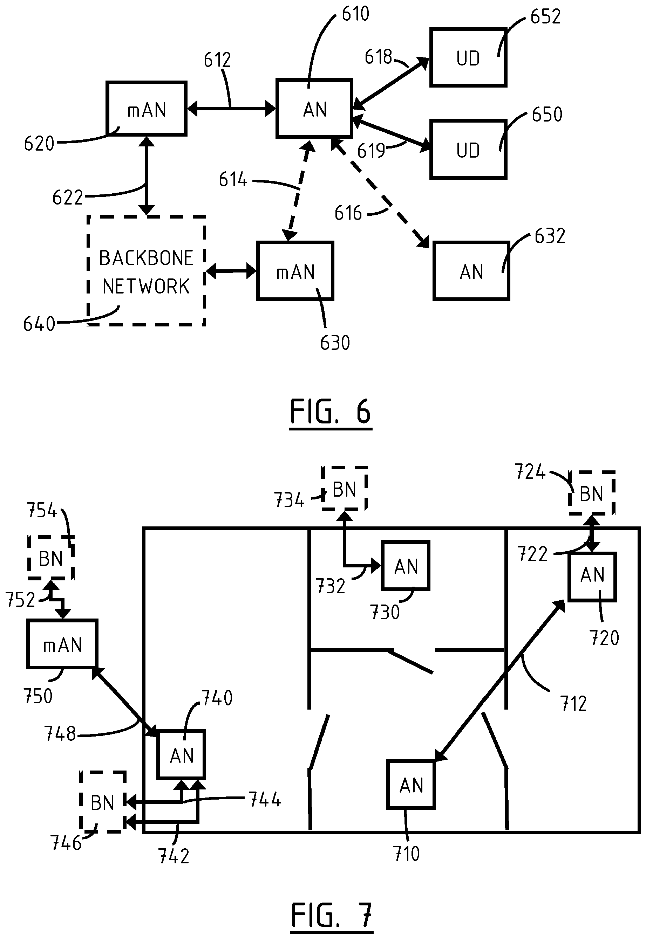

Now referring to Figure 6, an access node 610 is coupled 612 via its backhaul interface 112 to a master access node 620. The master access node may in turn be coupled 622 to the backbone network 640 and may provide the connected to the backbone network 640 for the access node 610. The access node 640 may also be directly coupled (not shown) to the backbone network 240 via its backhaul interface, in which case the access node may be called a master access node.

The access node 610 may use its backhaul interface to couple 614 to master access node 630 or to couple 616 to access node 632. The master access nodes 620 and 630 and access node 632 are the other, or neighboring, access nodes described above, having the other backhaul interfaces. One of these other access nodes 620, 630, and 632 may be considered in terms of their location and backhaul interface to be a potential backhaul interface for use by the access node 610. In the above method steps, a potential backhaul interface having at least sufficient available backhaul data throughput would be marked as a marked backhaul interface.

The access node 610 is coupled 618, 619 to user devices 652 and 650 via its fronthaul interface 114. As described below, depending on the locations and/or relative distance of the user devices the access node may be moved to a new location in order to connect to the potential backhaul interface of any of the other access nodes as long as the user devices can still be couple to the access node when the latter is in the new location.

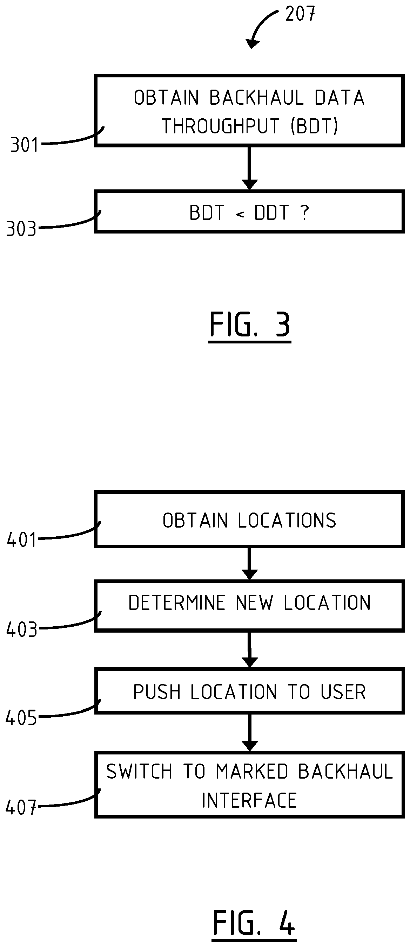

Figure 3 shows steps of a preferred embodiment of step 207 of obtaining respective backhaul interface parameters of one or more other backhaul interfaces used by the neighboring access nodes. Herein, step 301 is the step of requesting, from one or more neighboring access nodes of the indoor network, respective backhaul interface parameters of one or more other backhaul interfaces used by the neighboring access nodes; and step 303 is the step of receiving the requested backhaul interface parameters.

Since the backhaul interface parameters, such as the type of backhaul interface used by the other, neighboring, access nodes may change, the embodiment of figure 3 will allow the access node to obtain updated parameters of the other access nodes.

In an alternative embodiment, the access node may receive the parameters from a central server, such as a remote management server of a provider, which may have a database or the like containing all the backhaul interface parameters and further parameters of operation of the access nodes that it is managing.

In Figure 4, further method steps are shown that relate to a combined use of the data throughputs of the backhaul interfaces and locations in for instance a home of the access nodes in the home network. It will be understood that these steps may be incorporated in any of the embodiments of the other figures.

Step 401 is the step of obtaining one or more locations of the one or more neighboring access nodes. A location may be seen as position information using a coordinate system such as an x-y coordinate system that relates to a certain home or office, or a floor and/or room thereof. This x-y coordinate system may have a certain origin, that is the same for all access nodes. The units may be relative to the home, e.g. using a certain grid, or may be standard units such as the meter. The location may also be position information using standard coordinate systems. An indoor localization system may be used for this purpose.

The location may furthermore be relative locations defined as distances. In other words, the obtained locations of the neighboring access nodes are preferably relative locations defined as distances of the neighboring access nodes relative to the access node.

Furthermore, the locations may be estimated locations based on for instance received signal strength indicators or other means known in the art.

In all cases, the access node may obtain relative distances $d_i$, wherein i indicates each marked other backhaul interface (or corresponding access node using that marked other backhaul interface).

Step 403 indicates the step of determining a new location for the access node, wherein the new location is preferably the location of the neighboring access node corresponding to the marked other backhaul interface. The new location would be any location wherein the access node is able to use the marked other backhaul interface of the corresponding neighboring access node. It is preferably approximately the same location as the neighboring access node corresponding to the marked other backhaul interface.

Step 405 is the step of pushing, to a user device, a request of relocating the access node to the new location. Pushing is used in the sense of sending a message or anything equivalent to the user or one or more of his user devices, to ask the user to relocate the access node to the new location. This new location may furthermore be indicated on a display or the like on the access node itself. There may furthermore be instructions for the user to plug in a certain cable, for instance, if needed to achieve step 407 of switching.

Step 407 is the step of switching the backhaul interface of the access node to the marked other backhaul interface for coupling the access node to the backbone network when the access node is relocated. This step may be performed by the access node if no further physical actions are needed, such as attaching or detaching of cables is required. Otherwise, this step will be performed after the user has performed the needed physical acts, which may be detected automatically and/or may be indicated by the user on the access node or via other means, such as via a web interface or the like.

In an embodiment, when method steps according to figure 4 are performed with the steps of figure 2, the criteria further comprise a distance-throughput criterion, wherein the distance-throughput criterion is met for the other backhaul interface having a maximum corresponding weighted available data throughput, wherein the weighted available data throughput is the available data throughput weighted by the distance of the neighboring access nodes corresponding to the other backhaul interfaces.

This distance-throughput criterion is especially advantageous in case there are multiple marked other backhaul interfaces, i.e. potential backhaul interfaces that the access node may use because their available data throughput is sufficient. The weighting is performed to obtain the marked other backhaul interface having a relatively large available data throughput and being at a relatively short distance away from the access node.

The weighting may for example be performed according to the following pseudocode:

$$C = \mathrm{argmax}\{T_i * (1/d_i) \;\forall\; i \in L \}$$

In the above pseudocode, L indicates the set of marked other backhaul interfaces having sufficient available data throughputs to satisfy the user device demanded data throughput. The distance from the access node of each of the access nodes in L is indicated with $d_i$. $T_i$ indicates the available data throughputs for corresponding ones of the marked other backhaul interfaces in L. C indicates the candidate solution, i.e. the marked other backhaul interface having a maximum data throughput weighted with one over the distance.

Figure 7 further describes the indoor network described in Figure 6, in terms of position and/or location in a plan of a floor, for instance of a home or office. Access node 710 is coupled 712 via its backhaul interface to access node 720. Access node 720 is coupled 722 to the backbone network 724 and therefore access node 720 is serving as a master access node. User devices are not shown, but may be connected to any of the (master) access nodes. A further access node 730 is coupled 732 to the backbone network 734. Another access node 740 is coupled 342 to the backbone network 746. This access node 740 has multiple backhaul interfaces, such that it may also couple 344 to the backbone network 746 via another technology. The first 342 and second 344 couplings may be, for instance, PLC and DSL respectively. Access node 740 may also couple 748 wirelessly to a master access node 750 that is outside of the present house. Coupling 748 may be for instance according to the Long-Term Evolution (LTE) standard of the 3rd Generation Partnership Project (3GPP). Master access node 750 is further coupled 752 to backbone network 754. The backbone networks 724, 734, 746 and 754 may be the same backbone network, such as the internet or a corporate network.

In case a the present backhaul interface coupling 712 does not give sufficient data rate for the user devices (not shown) connected to the access node 710, access node 710 may use another backhaul interface and may be moved, as described above.

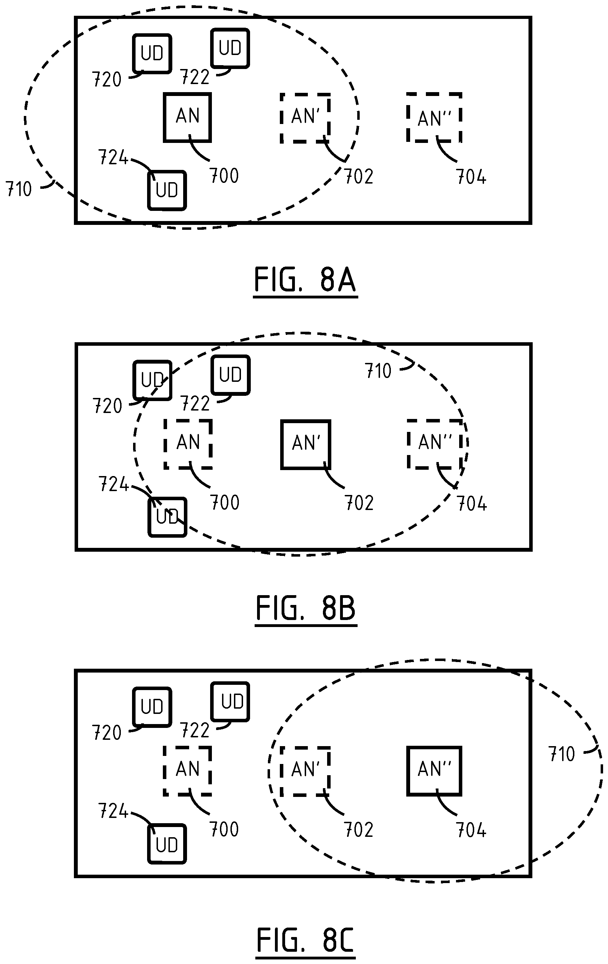

In the above repositioning to the new location, the new location may be at a position that is too far away for the access node to be able to still couple to all of the user devices. This is indicated in Figures 8A-8C. An access node that is in position 800 serves user devices 820, 822 and 824. The present wireless coverage is indicated with the circle 810. If moved to position 802, the access node is still able to serve a connection to the user devices, as indicated with circle 812. If, however, the access node would be positioned in position 804, the access node would be out of reach for the user devices. Position 804 may therefore be an unwanted new location for the access node.

Therefore, in an embodiment, there is the step of obtaining position information of the user devices connected to the access node, wherein the criteria further comprise a user device-criterion which is met when all connections between the access node and the user devices are expected to be maintained at the new location.

In a preferred embodiment, when the position information of the user devices comprises position coordinates of the user devices determined by the user devices, the method further comprising estimating a service region that needs serving of a connection to a user device by the access node, wherein the service region is represented by a polygon built up of the position coordinates of the user devices that are furthest away from the access node, wherein user device-criterion is met when the serving region is within range of the access node when the access node is at the new location.

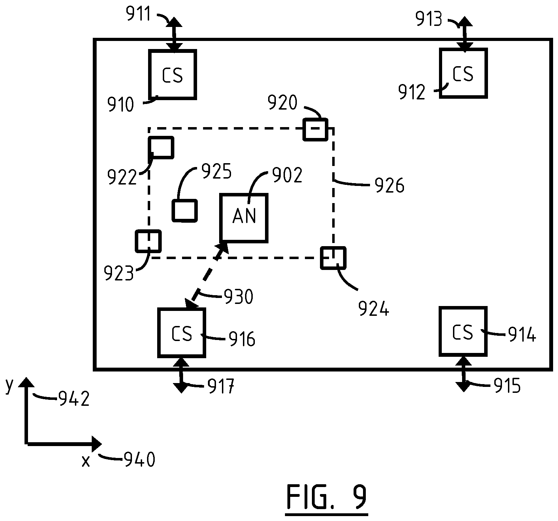

Estimating of a service region is shown in Figure 9. Herein, a candidate solution is sought for access node 902, which is coupling user devices 920, 922, 923, 924 and 925 to the backbone network. Four candidate solutions 910, 912, 914 and 916 are shown, with respective backhaul interfaces 911, 913, 915 and 917. The AN may change to a respective backhaul interface of one of these candidate solutions, as long as it may serve the whole service region. If more than one candidate solution is suitable, a weighting as described above may be applied.

The service region is estimated based on the obtained coordinates of the furthest away user devices. As an example, x 942 and y 940 coordinate directions are indicated, according to which the user devices (ud) may have a position $x_{ud}, y_{ud}$. The estimation results in a polygon 926 indicated with the dashed lines. User device 925 falls within the polygon since it is not one of the outer most user devices.

The maximum and minimum x and y coordinates of the service region polygon may be calculated as

$$x_{min} = \min_{\forall i \in M} x_i,$$

$$x_{max} = \max_{\forall i \in M} x_i,$$

$$y_{min} = \min_{\forall i \in M} y_i,$$

$$y_{max} = \max_{\forall i \in M} y_i,$$

with M being a list of all user devices served by the access node. In this case, if there is a coordinate system having right angles for the two coordinates x and y, the polygon will be of a rectangular shape.

In case no position coordinates are available, in an embodiment, the position information comprises indirect position information, being for instance received signal strength indicators of the access node by the user devices. Then, in a further step, distances of the user devices from the access node based on the position information are calculated or estimated.

calculating a maximum distance by which the access node can be moved that allows all connections to the user devices to be maintained,

wherein the user device-criterion is met when the new location is located at a distance from the present location of the access node that is smaller than or equal to the maximum distance.

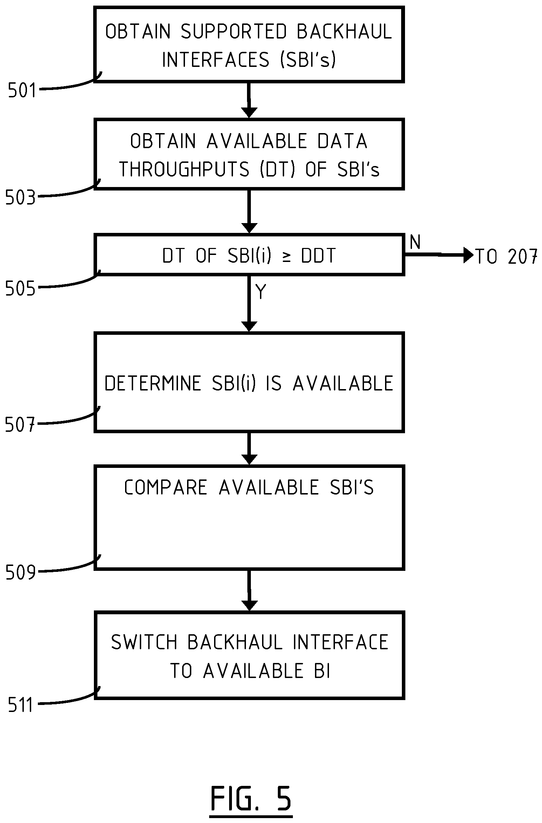

In the embodiment of Figure 5, the method may comprise further steps, preferably executed before step 207 of obtaining respective backhaul interface parameters of one or more other backhaul interfaces used by the neighboring access nodes of Figure 2.

When, as in step 205, the obtained backhaul data throughput BDT is lower than the demanded data throughput DDT, step 501 of providing a list of one or more supported backhaul interfaces that are supported by the access node is performed. Thereafter, step 503 of obtaining respective available data throughputs of the supported backhaul interfaces is performed.

The set of all supported backhaul interfaces by the access node may be denoted by B. The set consists of two subsets, $B_w$ and $B_l$, where $B_w$ is the set of supported wired backhaul links (e.g. PLC, Ethernet,...etc) and $B_l$ contains the supported wireless backhaul links (e.g. IEEE 802.11ax, mmWave, LTE,...etc.). Given the current position of the access node, not all the backhaul interface types that are supported may be available. For example, an access node deployed far from a PLC connector will not be able to evaluate the PLC available throughput. A set of available backhaul links in the current location as $B_{(x,y)}$ may be defined. Similar to the supported links, the available wired and wireless links at the current location are denoted by $B_w(x,y)$ and $B_l(x,y)$, respectively.

The access node may start by scanning the available wireless backhaul links (i.e. obtaining the set $B_l^{(x,y)}$. This may be done by switching the receiver of access node on each of the supported wireless backhaul interfaces or wireless links in $B_L$ and records their corresponding available data throughputs. In case of finding a wireless backhaul link whose throughput can support the user's device demands or in case use of this wireless link decreases the impact on other access nodes in the network, the access node may switch to this wireless interface and use it as the backhaul link.

In general, step 505 indicates determining whether the respective available data throughputs DT(i) of the supported backhaul interfaces SBI is larger than, or equal to, the demanded data throughput DDT. If yes, the respective SBI is determined to be available in step 507. If no, none of the SBIs are available and the method preferably proceeds with step 207 of figure 2.

In step 509, when more than one supported backhaul interface has been determined to be an available backhaul interface, the available data throughputs of the available backhaul interfaces are compared. Step 511 indicates the step of switching to the available backhaul interface having the largest respective available data throughput.

In light of the above, by obtaining backhaul interface parameters from the backhaul interfaces used by the neighboring access node, it can be determined whether sufficient data throughput is available to provide sufficient data throughput as demanded by the user devices connected to the access node. The backhaul interface parameters may for instance comprise the type of backhaul interface and available data throughput of that interface. In case only one of the other backhaul interfaces are marked as a potential backhaul interface to connect the access node to the backbone network, then if possible, the access node may switch to this backhaul interface, depending for instance on the present location of the access node. In case more than one backhaul interfaces are marked as potential backhaul interfaces, the marked backhaul interface having the largest available throughput may be chosen, but furthermore other criteria may be envisaged by the skilled person, some of which are part of further embodiments described below.

Furthermore, the method allows for each of the access nodes to know the present configuration of the other access nodes, which will improve the choice of the new configuration of the access node.

Furthermore, by obtaining the locations of the neighboring access nodes, not only a new backhaul interface but also a new location for the access node can be determined. Such a new configuration allows a further improvement of the deployment of the access node and the connection quality experienced by a user using his user device.

Moreover, in case the locations are relative locations defined as distances, for instance in case an indoor localization system is unavailable, the locations may still be obtained, for instance based on received signal strength indicators (RSSIs). An RSSI is a measurement of the power present in a received radio signal, which gives an indication of distance. Even in case an indoor localization system is available, using a relative distance is favorable since a location with the least movement of the access node may be favorable.

Furthermore, regarding the distance-throughput criterion, the other backhaul interface providing the best position in view of its available data throughput as well as location will be used as the new backhaul interface for the access node, after movement of the access node to this new location.

Since a new location may be determined for the access node, in this manner, it can be assured that the connected user devices are still being served by the access node after being moved.

Knowing where user devices are situated, e.g. by the use of the position information, allows the new location to be reviewed as to being suitable for still allowing the user devices connected to the access node being served by the access node.

When the position information comprises indirect position information, e.g. in case no indoor localization technique is available, still a maximum distance that the access node is allowed to be moved is determined, thereby allowing all user devices to remain served by the access node, either by not moving the access node because the candidate solution was too far away, or after the access node is moved to the new location since this was within the maximum distance that was calculated.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the figures, including any functional blocks labelled as "units", "processors" or "modules", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "unit", "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Whilst the principles of the invention have been set out above in connection with specific embodiments, it is to be understood that this description is merely made by way of example and not as a limitation of the scope of protection which is determined by the appended claims.

**Claims**

1. Method of improving a deployment of an access node in an indoor network, the method comprising:

   determining (201) a data throughput demanded by user devices connected to the access node, wherein the access node has a present configuration comprising a presently used backhaul interface coupling the access node to a backbone network and a present location of the access node;
   obtaining (203) a backhaul data throughput of the present backhaul interface of the access node;
   when the obtained backhaul data throughput is lower than the demanded data throughput, obtaining (207) respective backhaul interface parameters of one or more other backhaul interfaces used by the neighboring access nodes;
   determining (209) an available data throughput for each of the other backhaul interfaces for which backhaul interface parameters are received based on the received backhaul interface parameters;
   marking (213) one or more of the other backhaul interfaces as a marked other backhaul interface usable for coupling the access node to the backbone network when one or more criteria are met, the criteria comprising a throughput criterion which is met when the respective determined available data throughput is equal to or larger than the demanded data throughput. the method is **characterised by**
   obtaining (401) one or more locations of one or more neighboring access nodes;
   determining (403) a new location for the access node, wherein the new location is the location of the neighboring access node corresponding to the marked other backhaul interface;
   pushing (405), to a user device, a request of relocating the access node to the new location; and
   switching (407) the backhaul interface of the access node to the marked other backhaul interface for coupling the access node to the backbone network when the access node is relocated.

2. Method according to claim 1, wherein the step of obtaining respective backhaul interface parameters of one or more other backhaul interfaces used by the neighboring access nodes comprises:

   requesting, from one or more neighboring access nodes of the indoor network, respective backhaul interface parameters of one or more other backhaul interfaces used by the neighboring access nodes; and
   receiving the requested backhaul interface parameters.

3. Method according to claim 1, wherein the obtained locations of the neighboring access nodes are relative locations defined as distances of the neighboring access nodes relative to the access node.

4. Method according to 3, wherein the criteria further comprise a distance-throughput criterion, wherein the distance-throughput criterion is met for the other backhaul interface having a maximum corresponding weighted available data throughput, wherein the weighted available data throughput is the available data throughput weighted by the distance of the neighboring access nodes corresponding to the other backhaul interfaces.

5. Method according to any of claims 1 to 4, further comprising:
   obtaining position information of the user devices connected to the access node, wherein the criteria further comprise a user device-criterion which is met when all connections between the access node and the user devices are expected to be maintained at the new location.

6. Method according to claim 5, wherein the position information of the user devices comprises position coordinates of the user devices determined by the user devices,

   the method further comprising estimating a service region that needs serving of a connection to a user device by the access node, wherein the service region is represented by a polygon built up of the position coordinates of the user devices that are furthest away from the access node,
   wherein user device-criterion is met when the serving region to be within range of the access node when the access node is at the new location.

7. Method according to claim 5, wherein the position information comprises indirect position information, being for instance received signal strength indicators of the access node by the user devices, the method further comprising:

   calculating distances of the user devices from the access node based on the position information;
   calculating a maximum distance by which the access node can be moved that allows all connections to the user devices to be maintained,
wherein the user device-criterion is met when the new location is located at a distance from the present location of the access node that is smaller than or equal to the maximum distance.

8.  Method according to any one of the preceding claims, wherein the backhaul interface parameters of the other backhaul interfaces comprise a type of backhaul interface, a maximum data throughput of the backhaul interface, a utilization percentage of the backhaul interface, wherein the available data throughput is calculated based on the maximum data throughput and the utilization percentage, preferably by multiplying the maximum data throughput with an open percentage, wherein the open percentage is 100% minus the utilization percentage.

9.  Method according to any one of the preceding claims, further comprising, before the step of obtaining respective backhaul interface parameters of one or more other backhaul interfaces used by the neighboring access nodes:

     when the obtained backhaul data throughput is lower than the demanded data throughput, providing a list of one or more supported backhaul interfaces that are supported by the access node;
     obtaining respective available data throughputs of the supported backhaul interfaces;
     determining a supported backhaul interface to be an available backhaul interface to the access node when the respective available data throughputs of the supported backhaul interfaces is larger than, or equal to, the demanded data throughput;
     when more than one supported backhaul interface has been determined to be an available backhaul interface, comparing available data throughputs of the available backhaul interfaces;
     switching to an available backhaul interface of the available backhaul interfaces having the largest respective available data throughput.

10. Method according to claim 9, wherein the supported backhaul interfaces comprise one or more supported wireless backhaul interfaces, the method further comprising determining a supported wireless backhaul interface to be an available backhaul interface when an amount of network degradation caused by the present configuration is larger than a threshold value.

11. Method according to claim 10,

     wherein the available data throughputs of the supported wireless backhaul interfaces are obtained by scanning the supported wireless backhaul interfaces,
     wherein the scanning of the supported wireless backhaul interfaces comprises sequentially switching a receiver of the access node to each of the supported wireless backhaul interfaces and recording a corresponding available data throughput, and determining that a wireless backhaul interface is available when the corresponding achievable data throughput is above a threshold value.

12. Access node for providing access to a home network, comprising:

     a backhaul interface configured for coupling the access node to a backbone network; and
     a fronthaul interface configured for wirelessly connecting the access node to one or more user devices; and
     a controller, wherein the controller is configured to:

          determine (201) a data throughput demanded by user devices connected to the access node, wherein the access node has a present configuration comprising a presently used backhaul interface coupling the access node to a backbone network and a present location of the access node;
          obtain (203) a backhaul data throughput of the present backhaul interface of the access node;
          when the obtained backhaul data throughput is lower than the demanded data throughput, obtain (207) respective backhaul interface parameters of one or more other backhaul interfaces used by the neighboring access nodes;
          determine (209) an available data throughput for each of the other backhaul interfaces for which backhaul interface parameters are received based on the received backhaul interface parameters;
          mark (213) one or more of the other backhaul interfaces as a marked other backhaul interface for use as the backhaul interface of the access node when one or more criteria are met, the criteria comprising a throughput criterion which is met when the respective determined available data throughput is equal to or larger than the demanded data throughput.
          obtain (401) one or more locations of one or more neighboring access nodes;

determine (403) a new location for the access node, wherein the new location is the location of the neighboring access node corresponding to the marked other backhaul interface;
push (405), to a user device, a request of relocating the access node to the new location; and
switch (407) the backhaul interface of the access node to the marked other backhaul interface for coupling the access node to the backbone network when the access node is relocated.

13. A computer program product comprising a computer-executable program of instructions for performing, when executed on a computer, the steps of the method of any one of claims 1-10.

**Patentansprüche**

1. Verfahren zum Verbessern eines Einsatzes eines Zugangsknotens in einem Gebäudenetzwerk, wobei das Verfahren Folgendes umfasst:

   Bestimmen (201) eines Datendurchsatzes, der von Benutzervorrichtungen, die mit dem Zugangsknoten verbunden sind, gefordert wird, wobei der Zugangsknoten eine aktuelle Auslegung aufweist, die eine derzeit verwendete Backhaulschnittstelle, die den Zugangsknoten an ein Backbonenetzwerk koppelt, und einen aktuellen Standort des Zugangsknotens umfasst;
   Erhalten (203) eines Backhauldatendurchsatzes der aktuellen Backhaulschnittstelle des Zugangsknotens;
   Erhalten (207) von jeweiligen Backhaulschnittstellenparametern von einer oder mehreren anderen Backhaulschnittstellen, die von benachbarten Zugangsknoten verwendet werden, wenn der erhaltene Backhauldatendurchsatz geringer ist als der geforderte Datendurchsatz;
   Bestimmen (209) eines verfügbaren Datendurchsatzes für jede der anderen Backhaulschnittstellen, für die Backhaulschnittstellenparameter empfangen werden, auf Basis der empfangenen Backhaulschnittstellenparameter;
   Markieren (213) von einer oder mehreren der anderen Backhaulschnittstellen als eine markierte andere Backhaulschnittstelle, die zum Koppeln des Zugangsknotens an das Backbonenetzwerk verwendbar sind, wenn eine oder mehrere Kriterien erfüllt sind, wobei die Kriterien ein Durchsatzkriterium umfassen, das erfüllt ist, wenn der jeweilige bestimmte verfügbare Datendurchsatz gleich oder größer als der geforderte Datendurchsatz ist, wobei das Verfahren durch Folgendes gekennzeichnet ist
   Erhalten (401) von einem oder mehreren Standorten von einem oder mehreren benachbarten Zugangsknoten;
   Bestimmen (403) eines neuen Standorts für den Zugangsknoten, wobei der neue Standort der Standort des benachbarten Zugangsknotens ist, der der markierten anderen Backhaulschnittstelle entspricht;
   Pushen (405) einer Anforderung zum Verlegen des Zugangsknotens an den neuen Standort zu einer Benutzervorrichtung; und
   Umschalten (407) der Backhaulschnittstelle des Zugangsknotens zur markierten anderen Backhaulschnittstelle zum Koppeln des Zugangsknotens an das Backbonenetzwerk, wenn der Zugangsknoten verlegt wurde.

2. Verfahren nach Anspruch 1, wobei der Schritt des Erhaltens von jeweiligen Backhaulschnittstellenparametern von einer oder mehreren anderen Backhaulschnittstellen, die von benachbarten Zugangsknoten verwendet werden, Folgendes umfasst:

   Anfordern von jeweiligen Backhaulschnittstellenparametern von einer oder mehreren anderen Backhaulschnittstellen, die von benachbarten Zugangsknoten verwendet werden, von einem oder mehreren benachbarten Zugangsknoten des Gebäudenetzwerks; und
   Empfangen der angeforderten Backhaulschnittstellenparameter.

3. Verfahren nach Anspruch 1, wobei die erhaltenen Standorte der benachbarten Zugangsknoten relative Standorte sind, die als Abstände der benachbarten Zugangsknoten relativ zum Zugangsknoten definiert sind.

4. Verfahren nach Anspruch 3, wobei die Kriterien ferner ein Abstandsdurchsatzkriterium umfassen, wobei das Abstandsdurchsatzkriterium für die andere Backhaulschnittstelle erfüllt ist, die einen maximalen entsprechenden gewichteten verfügbaren Datendurchsatz aufweist, wobei der gewichtete verfügbare Datendurchsatz der verfügbare Datendurchsatz ist, der durch den Abstand der benachbarten Zugangsknoten, die den anderen Backhaulschnittstellen entsprechen, gewichtet ist.

5. Verfahren nach einem der Ansprüche 1 bis 4, das ferner Folgendes umfasst:

Erhalten von Positionsinformationen der Benutzervorrichtungen, die mit dem Zugangsknoten verbunden sind, wobei die Kriterien ferner ein Benutzervorrichtungskriterium umfassen, das erfüllt ist, wenn erwartet wird, dass alle Verbindungen zwischen dem Zugangsknoten und den Benutzervorrichtungen am neuen Standort aufrechterhalten werden.

6. Verfahren nach Anspruch 5, wobei die Positionsinformationen der Benutzervorrichtungen von den Benutzervorrichtungen bestimmte Positionskoordinaten der Benutzervorrichtungen umfassen,

wobei das Verfahren ferner das Schätzen einer Dienstregion umfasst, die das Bedienen einer Verbindung einer Benutzervorrichtung durch einen Zugangsknoten erfordert, wobei die Dienstregion durch ein Polygon repräsentiert ist, das aus den Positionskoordinaten der Benutzervorrichtungen, die am weitesten vom Zugangsknoten entfernt sind, gebildet wird,
wobei das Benutzervorrichtungskriterium erfüllt ist, wenn die bedienende Region innerhalb der Reichweite des Zugangsknotens liegt, wenn sich der Zugangsknoten am neuen Standort befindet.

7. Verfahren nach Anspruch 5, wobei die Positionsinformationen indirekte Positionsinformationen umfassen, bei denen es sich beispielsweise um Empfangssignalstärkeindikatoren des Zugangsknotens durch die Benutzervorrichtungen handelt, wobei das Verfahren ferner Folgendes umfasst:

Berechnen von Abständen der Benutzervorrichtung vom Zugangsknoten auf Basis der Positionsinformationen;
Berechnen eines maximalen Abstands, um den der Zugangsknoten bewegt werden kann und der es erlaubt, dass alle Verbindungen zu den Benutzervorrichtungen aufrechterhalten werden,
wobei das Benutzervorrichtungskriterium erfüllt ist, wenn sich der neue Standort in einem Abstand vom aktuellen Standort des Zugangsknotens befindet, der kleiner als oder gleich dem maximalen Abstand ist.

8. Verfahren nach einem der vorhergehenden Ansprüche, wobei die Backhaulschnittstellenparameter der anderen Backhaulschnittstellen einen Typ einer Backhaulschnittstelle, einen maximalen Datendurchsatz der Backhaulschnittstelle, einen Auslastungsprozentsatz der Backhaulschnittstelle umfassen, wobei der verfügbare Datendurchsatz auf Basis des maximalen Datendurchsatzes und des Auslastungsprozentsatzes berechnet wird, vorzugsweise durch Multiplizieren des maximalen Datendurchsatzes mit einem offenen Prozentsatz, wobei der offene Prozentsatz 100% minus des Auslastungsprozentsatzes ist.

9. Verfahren nach einem der vorhergehenden Ansprüche, das vor dem Schritt des Erhaltens von jeweiligen Backhaulschnittstellenparametern von einer oder mehreren anderen Backhaulschnittstellen, die von den benachbarten Zugangsknoten verwendet werden, ferner Folgendes umfasst:

Bereitstellen einer Liste von einer oder mehreren unterstützten Backhaulschnittstellen, die vom Zugangsknoten unterstützt werden, wenn der erhaltene Backhauldatendurchsatz geringer ist als der geforderte Datendurchsatz;
Erhalten von jeweiligen verfügbaren Datendurchsätzen der unterstützten Backhaulschnittstellen;
Bestimmen, dass eine unterstützte Backhaulschnittstelle eine verfügbare Backhaulschnittstelle zum Zugangsknoten ist, wenn die jeweiligen verfügbaren Datendurchsätze der unterstützten Backhaulschnittstellen größer als oder gleich dem geforderten Datendurchsatz sind;
Vergleichen von verfügbaren Datendurchsätzen der verfügbaren Backhaulschnittstellen, wenn bestimmt wurde, dass mehr als eine unterstützte Backhaulschnittstelle eine verfügbare Backhaulschnittstelle ist;
Umschalten auf eine verfügbare Backhaulschnittstelle der verfügbaren Backhaulschnittstellen mit dem größten jeweiligen verfügbaren Datendurchsatz.

10. Verfahren nach Anspruch 9, wobei die unterstützten Backhaulschnittstellen eine oder mehrere unterstützte drahtlose Backhaulschnittstellen umfassen, wobei das Verfahren ferner das Bestimmen, dass eine unterstützte drahtlose Backhaulschnittstelle eine verfügbare Backhaulschnittstelle ist, wenn ein Betrag der durch die aktuelle Auslegung verursachten Netzwerkverschlechterung größer ist als ein Schwellwert, umfasst.

11. Verfahren nach Anspruch 10,

wobei die verfügbaren Datendurchsätze der unterstützten drahtlosen Backhaulschnittstellen durch Scannen der unterstützten drahtlosen Backhaulschnittstellen erhalten werden,
wobei das Scannen der unterstützten drahtlosen Backhaulschnittstellen das sequenzielle Umschalten eines Empfängers des Zugangsknotens auf jede der unterstützten drahtlosen Backhaulschnittstellen und das Aufzeichnen eines entsprechenden verfügbaren Datendurchsatzes sowie das Bestimmen, dass eine drahtlose Backhaulschnittstelle verfügbar ist, wenn der entsprechende erreichbare Datendurchsatz über einem Schwellwert liegt, umfasst.

**12.** Zugangsknoten zum Bereitstellen des Zugangs zu einem Heimnetzwerk, der Folgendes umfasst:

eine Backhaulschnittstelle, die zum Koppeln des Zugangsknotens an ein Backbonenetzwerk ausgelegt ist; und
eine Fronthaulschnittstelle, die zum drahtlosen Verbinden des Zugangsknotens mit einer oder mehreren Benutzervorrichtungen ausgelegt ist; und
eine Steuerung, wobei die Steuerung zu Folgendem ausgelegt ist:

Bestimmen (201) eines Datendurchsatzes, der von Benutzervorrichtungen, die mit dem Zugangsknoten verbunden sind, gefordert wird, wobei der Zugangsknoten eine aktuelle Auslegung aufweist, die eine derzeit verwendete Backhaulschnittstelle, die den Zugangsknoten an ein Backbonenetzwerk koppelt, und einen aktuellen Standort des Zugangsknotens umfasst;
Erhalten (203) eines Backhauldatendurchsatzes der aktuellen Backhaulschnittstelle des Zugangsknotens;
Erhalten (207) von jeweiligen Backhaulschnittstellenparametern von einer oder mehreren anderen Backhaulschnittstellen, die von benachbarten Zugangsknoten verwendet werden, wenn der erhaltene Backhauldatendurchsatz geringer ist als der geforderte Datendurchsatz;
Bestimmen (209) eines verfügbaren Datendurchsatzes für jede der anderen Backhaulschnittstellen, für die Backhaulschnittstellenparameter empfangen werden, auf Basis der empfangenen Backhaulschnittstellenparameter;
Markieren (213) von einer oder mehreren der anderen Backhaulschnittstellen als eine markierte andere Backhaulschnittstelle zur Verwendung als die Backhaulschnittstelle des Zugangsknotens, wenn eine oder mehrere Kriterien erfüllt sind, wobei die Kriterien ein Durchsatzkriterium umfassen, das erfüllt ist, wenn der jeweilige bestimmte verfügbare Datendurchsatz gleich oder größer als der geforderte Datendurchsatz ist;
Erhalten (401) von einem oder mehreren Standorten von einem oder mehreren benachbarten Zugangsknoten;
Bestimmen (403) eines neuen Standorts für den Zugangsknoten, wobei der neue Standort der Standort des benachbarten Zugangsknotens ist, der der markierten anderen Backhaulschnittstelle entspricht;
Pushen (405) einer Anforderung zum Verlegen des Zugangsknotens an den neuen Standort zu einer Benutzervorrichtung und
Umschalten (407) der Backhaulschnittstelle des Zugangsknotens zur markierten anderen Backhaulschnittstelle zum Koppeln des Zugangsknotens an das Backbonenetzwerk, wenn der Zugangsknoten verlegt wurde.

**13.** Computerprogrammprodukt, das ein computerausführbares Programm mit Anweisungen zum Durchführen der Schritte des Verfahrens von einem der Ansprüche 1 bis 10, wenn es auf einem Computer ausgeführt wird, umfasst.

**Revendications**

**1.** Procédé d'amélioration d'un déploiement d'un nœud d'accès dans un réseau intérieur, le procédé comprenant :

la détermination (201) d'un débit de données exigé par des dispositifs d'utilisateur connectés au nœud d'accès, dans lequel le nœud d'accès a une configuration actuelle comprenant une interface de backhaul actuellement utilisée couplant le nœud d'accès à un réseau dorsal et un emplacement actuel du nœud d'accès ;
l'obtention (203) d'un débit de données de backhaul de l'interface de backhaul actuelle du nœud d'accès ;
lorsque le débit de données de backhaul obtenu est inférieur au débit de données exigé, l'obtention (207) de paramètres d'interface de backhaul respectifs d'une ou plusieurs autres interfaces de backhaul utilisées par les nœuds d'accès voisins ;
la détermination (209) d'un débit de données disponible pour chacune des autres interfaces de backhaul pour lesquelles des paramètres d'interfaces de backhaul sont reçus sur la base des paramètres d'interfaces de backhaul reçus ;
le marquage (213) d'une ou plusieurs des autres interfaces de backhaul comme une autre interface de backhaul marquée pouvant être utilisée pour coupler le nœud d'accès au réseau dorsal lorsqu'un ou plusieurs critères sont satisfaits, les critères comprenant un critère de débit qui est satisfait lorsque le débit de données disponible déterminé respectif est égal ou supérieur au débit de données exigé, le procédé est **caractérisé par**

l'obtention (401) d'un ou plusieurs emplacements d'un ou plusieurs nœuds d'accès voisins ;
la détermination (403) d'un nouvel emplacement pour le nœud d'accès, dans lequel le nouvel emplacement est l'emplacement du nœud d'accès voisin correspondant à l'autre interface de backhaul marquée ;
l'avance (405), à un dispositif d'utilisateur, d'une demande de relocalisation du nœud d'accès au nouvel emplacement ; et
la commutation (407) de l'interface de backhaul du nœud d'accès sur l'autre interface de backhaul marquée pour coupler le nœud d'accès au réseau dorsal lorsque le nœud d'accès est relocalisé.

**2.** Procédé selon la revendication 1, dans lequel l'étape d'obtention de paramètres d'interface de backhaul respectifs d'une ou plusieurs autres interfaces de backhaul utilisées par les nœuds d'accès voisins comprend :

la demande, en provenance d'un ou plusieurs nœuds d'accès voisins du réseau intérieur, de paramètres d'interface de backhaul respectifs d'une ou plusieurs autres interfaces de backhaul utilisées par les nœuds d'accès voisins ; et
la réception des paramètres d'interfaces de backhaul demandés.

**3.** Procédé selon la revendication 1, dans lequel les emplacements obtenus des nœuds d'accès voisins sont des emplacements relatifs définis comme des distances des nœuds d'accès voisins par rapport au nœud d'accès.

**4.** Procédé selon la revendication 3, dans lequel les critères comprennent en outre un critère distance-débit, dans lequel le critère distance-débit est satisfait pour l'autre interface de backhaul ayant un débit de données disponible pondéré maximal correspondant, dans lequel le débit de données disponible pondéré est le débit de données disponible pondéré par la distance des nœuds d'accès voisins correspondant aux autres interfaces de backhaul.

**5.** Procédé selon l'une quelconque des revendications 1 à 4, comprenant en outre :
l'obtention d'informations de position des dispositifs d'utilisateur connectés au nœud d'accès, dans lequel les critères comprennent en outre un critère de dispositif d'utilisateur qui est satisfait lorsque toutes les connexions entre le nœud d'accès et les dispositifs d'utilisateur sont censées être maintenues au nouvel emplacement.

**6.** Procédé selon la revendication 5, dans lequel les informations de position des dispositifs d'utilisateur comprennent des coordonnées de position des dispositifs d'utilisateur, déterminées par les dispositifs d'utilisateur,

le procédé comprenant en outre l'estimation d'une région de service qui nécessite la desserte d'une connexion à un dispositif d'utilisateur par le nœud d'accès, dans lequel la région de service est représentée par un polygone construit à partir des coordonnées de position des dispositifs d'utilisateur qui sont les plus éloignés du nœud d'accès,
dans lequel le critère de dispositif d'utilisateur est satisfait lorsque la région de desserte est à portée du nœud d'accès lorsque le nœud d'accès se trouve au nouvel emplacement.

**7.** Procédé selon la revendication 5, dans lequel les informations de position comprennent des informations de position indirectes, qui sont par exemple des indicateurs d'intensité de signal reçu du nœud d'accès par les dispositifs d'utilisateur, le procédé comprenant en outre :

le calcul des distances des dispositifs d'utilisateur par rapport au nœud d'accès sur la base des informations de position ;
le calcul d'une distance maximale de déplacement du nœud d'accès permettant de maintenir toutes les connexions au dispositifs d'utilisateur,
dans lequel le critère de dispositif d'utilisateur est satisfait lorsque le nouvel emplacement est situé à une distance de l'emplacement actuel du nœud d'accès qui est inférieure ou égale à la distance maximale.

**8.** Procédé selon l'une quelconque des revendications précédentes, dans lequel les paramètres d'interfaces de backhaul des autres interfaces de backhaul comprennent un type d'interface de backhaul, un débit de données maximal de l'interface de backhaul, un pourcentage d'utilisation de l'interface de backhaul, dans lequel le débit de données disponible est calculé sur la base du débit de données maximal et du pourcentage d'utilisation, de préférence en multipliant le débit de données maximal par un pourcentage ouvert, dans lequel le pourcentage ouvert est égal à 100 % moins le pourcentage d'utilisation.

**9.** Procédé selon l'une quelconque des revendications précédentes, comprenant en outre, avant l'étape d'obtention de paramètres d'interface de backhaul respectifs d'une ou plusieurs autres interfaces de backhaul utilisées par les nœuds d'accès voisins :

lorsque le débit de données de backhaul obtenu est inférieur au débit de données exigé,
la fourniture d'une liste d'une ou plusieurs interfaces de backhaul prises en charge qui sont prises en charge par le nœud d'accès ;
l'obtention de débits de données disponibles respectifs des interfaces de backhaul prises en charge ;
la détermination d'une interface de backhaul prise en charge comme étant une interface de backhaul disponible pour le nœud d'accès lorsque les débits de données disponibles respectifs des interfaces de backhaul prises en charge sont supérieurs ou égaux au débit de données exigé ;
lorsque plus d'une interface de backhaul prise en charge a été déterminée comme étant une interface de backhaul disponible, la comparaison des débits de données disponibles des interfaces de backhaul disponibles ;
la commutation sur une interface de backhaul disponible des interfaces de backhaul disponibles ayant le plus grand débit de données disponible respectif.

10. Procédé selon la revendication 9, dans lequel les interfaces de backhaul prises en charge comprennent une ou plusieurs interfaces de backhaul sans fil prises en charge, le procédé comprenant en outre la détermination d'une interface de backhaul sans fil prise en charge comme étant une interface de backhaul disponible lorsqu'une quantité de dégradation de réseau provoquée par la configuration actuelle est supérieure à une valeur seuil.

11. Procédé selon la revendication 10,

dans lequel les débits de données disponibles des interfaces de backhaul sans fil prises en charge sont obtenus en balayant les interfaces de backhaul sans fil prises en charge,
dans lequel le balayage des interfaces de backhaul sans fil prises en charge comprend la commutation séquentielle d'un récepteur du nœud d'accès sur chacune des interfaces de backhaul sans fil prises en charge et l'enregistrement d'un débit de données disponible correspondant, et la détermination du fait qu'une interface de backhaul sans fil est disponible lorsque le débit de données correspondant réalisable est au-dessus d'une valeur seuil.

12. Nœud d'accès pour fournir un accès à un réseau domestique, comprenant :

une interface de backhaul configurée pour coupler le nœud d'accès à un réseau dorsal ; et
une interface de fronthaul configurée pour connecter sans fil le nœud d'accès à un ou plusieurs dispositifs d'utilisateur ; et
un dispositif de commande, dans lequel le dispositif de commande est configuré pour :

déterminer (201) un débit de données exigé par des dispositifs d'utilisateur connectés au nœud d'accès, dans lequel le nœud d'accès a une configuration actuelle comprenant une interface de backhaul actuellement utilisée couplant le nœud d'accès à un réseau dorsal et un emplacement actuel du nœud d'accès ;
obtenir (203) un débit de données de backhaul de l'interface de backhaul actuelle du nœud d'accès ;
lorsque le débit de données de backhaul obtenu est inférieur au débit de données exigé, obtenir (207) des paramètres d'interface de backhaul respectifs d'une ou plusieurs autres interfaces de backhaul utilisées par les nœuds d'accès voisins ;
déterminer (209) un débit de données disponible pour chacune des autres interfaces de backhaul pour lesquelles des paramètres d'interfaces de backhaul sont reçus sur la base des paramètres d'interfaces de backhaul reçus ;
marquer (213) une ou plusieurs des autres interfaces de backhaul comme une autre interface de backhaul marquée pouvant être utilisée comme interface de backhaul du nœud d'accès lorsqu'un ou plusieurs critères sont satisfaits, les critères comprenant un critère de débit qui est satisfait lorsque le débit de données disponible déterminé respectif est égal ou supérieur au débit de données exigé ;
obtenir (401) un ou plusieurs emplacements d'un ou plusieurs nœuds d'accès voisins ;
déterminer (403) un nouvel emplacement pour le nœud d'accès, dans lequel le nouvel emplacement est l'emplacement du nœud d'accès voisin correspondant à l'autre interface de backhaul marquée ;
avancer (405), à un dispositif d'utilisateur, une demande de relocalisation du nœud d'accès au nouvel emplacement ; et
commuter (407) l'interface de backhaul du nœud d'accès sur l'autre interface de backhaul marquée pour coupler le nœud d'accès au réseau dorsal lorsque le nœud d'accès est relocalisé.

**13.** Produit de programme informatique comprenant un programme d'instructions exécutable par ordinateur pour réaliser, lorsqu'il est exécuté sur un ordinateur, les étapes du procédé de l'une quelconque des revendication 1 à 10.

FIG. 1

FIG. 2

207

```
      ┌──────────────────────────────┐
      │   OBTAIN BACKHAUL DATA       │
      │    THROUGHPUT (BDT)          │
301 ──┤                              │
      └──────────────┬───────────────┘
                     │
                     ▼
      ┌──────────────────────────────┐
303 ──┤        BDT < DDT ?           │
      └──────────────────────────────┘
```

## FIG. 3

```
      ┌──────────────────────────────┐
401 ──┤      OBTAIN LOCATIONS        │
      └──────────────┬───────────────┘
                     │
                     ▼
      ┌──────────────────────────────┐
403 ──┤   DETERMINE NEW LOCATION     │
      └──────────────┬───────────────┘
                     │
                     ▼
      ┌──────────────────────────────┐
405 ──┤    PUSH LOCATION TO USER     │
      └──────────────┬───────────────┘
                     │
                     ▼
      ┌──────────────────────────────┐
      │  SWITCH TO MARKED BACKHAUL   │
      │          INTERFACE           │
407 ──┤                              │
      └──────────────────────────────┘
```

## FIG. 4

```
        ┌─────────────────────────────────┐
        │   OBTAIN SUPPORTED BACKHAUL      │
        │       INTERFACES (SBI's)         │
  501 ──┘└─────────────────────────────────┘
                        │
                        ▼
        ┌─────────────────────────────────┐
        │    OBTAIN AVAILABLE DATA         │
        │   THROUGHPUTS (DT) OF SBI's      │
  503 ──┘└─────────────────────────────────┘
                        │
                        ▼
        ┌─────────────────────────────────┐  N
        │      DT OF SBI(i) ≥ DDT          │───────▶ TO 207
  505 ──┘└─────────────────────────────────┘
                        │ Y
                        ▼
        ┌─────────────────────────────────┐
        │                                  │
        │   DETERMINE SBI(i) IS AVAILABLE  │
        │                                  │
  507 ──┘└─────────────────────────────────┘
                        │
                        ▼
        ┌─────────────────────────────────┐
        │                                  │
        │     COMPARE AVAILABLE SBI'S      │
        │                                  │
  509 ──┘└─────────────────────────────────┘
                        │
                        ▼
        ┌─────────────────────────────────┐
        │   SWITCH BACKHAUL INTERFACE      │
        │       TO AVAILABLE BI            │
  511 ──┘└─────────────────────────────────┘
```

FIG. 5

FIG. 6

FIG. 7

## FIG. 8A

## FIG. 8B

## FIG. 8C

EP 3 367 729 B1

FIG. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015175342 A1